# FASCICULE DE BREVET EUROPEEN

(11) **EP 0 348 286 B1**
(45) Date de publication et mention de la délivrance du brevet: **13.01.1993**
(21) Numéro de dépôt: 89401711.0
(22) Date de dépôt: 16.06.1989
(51) Int. Cl.: B60G 17/04

(54) **Dispositif de suspension hydropneumatique et véhicule automobile équipé de ce dispositif**
Hydropneumatisches Restaufhängungssystem und damit ausgestattetes Kraftfahrzeug
Hydropneumatic suspension system and motor vehicle equipped with this system

(30) Priorité: 21.06.1988 FR 8808317
(43) Date de publication de la demande: 27.12.1989
(73) Titulaire: AUTOMOBILES PEUGEOT, 75116 Paris (FR); AUTOMOBILES CITROEN, 92200 Neuilly-sur-Seine (FR)
(72) Inventeur: Benet, Jean, F-93220 Gagny (FR)
(74) Mandataire: Durand, Yves Armand Louis

(56) Documents cités:
- FR-A- 1 422 968
- FR-A- 2 152 351
- FR-A- 2 177 944
- FR-A- 2 362 017
- FR-A- 2 436 030
- FR-A- 2 569 524
- PATENT ABSTRACTS OF JAPAN vol. 10, No. 331 (M-533)(2387), 11 novembre 1986; & JP-A-61 135808 (TOYOTA MOTOR CORP.) 23.06.1986

## Description

L'invention concerne un dispositif de suspension hydropneumatique pour véhicule automobile.

Elle vise également un véhicule d'un type quelconque équipé de ce dispositif.

On connaît déjà, d'après par exemple le brevet français N° 1 483 928, un dispositif de suspension comportant pour chaque roue du véhicule un vérin hydraulique pourvu de deux accumulateurs hydropneumatiques, principal et auxiliaire, de caractéristiques élastiques différentes qui sont reliés au vérin par l'intermédiaire de moyens amortisseurs respectifs.

Ce dispositif, bien que fournissant une suspension évolutive à différents niveaux d'amortissement et de flexibilité ne permet pas une sélection de ces différents niveaux puisque chacun des vérins est relié de façon permanente aux deux accumulateurs hydropneumatiques dont il est équipé, l'accumulateur auxiliaire comportant simplement des caractéristiques choisies de telle sorte qu'il ne coopère avec le vérin qu'à partir d'une valeur de charge prédéterminée.

Par ailleurs, on connaît, d'après par exemple la demande de brevet N° 2 569 624, un dispositif de suspension à flexibilité et amortissement variables dans lequel chaque roue du véhicule est pourvue d'un vérin hydraulique associé à un accumulateur hydropneumatique principal, chaque essieu du véhicule étant équipé, par ailleurs, d'un accumulateur hydropneumatique supplémentaire pouvant être relié ou non, par l'intermédiaire de deux moyens amortisseurs respectifs, aux deux vérins de cet essieu.

Bien que ce dispositif permette une sélection des niveaux de suspension en dehors de valeurs seuil prédéterminées, il ne procure qu'une gamme de sélections limitée à deux niveaux.

On connaît encore d'après le document FR-A-2 362 017, un dispositif de suspension hydropneumatique correspondant au préambule de la revendication 1.

Dans le document JP-A-61 135 808 est décrit un moyen de régulation permettant la mise en communication d'accumulateurs soit simultanément, soit de façon séparée.

La présente invention a pour but de proposer un dispositif de suspension hydropneumatique simple et efficace, et permettant un choix de trois niveaux d'amortissement et de flexibilité commandables dans n'importe quelle circonstance en dehors de valeurs de charges prédéterminées appliquées aux vérins de la suspension.

A cet effet, l'invention a pour objet un dispositif de suspension hydropneumatique pour véhicule automobile et du type comportant un vérin hydraulique associé à chaque roue du véhicule et pourvu de deux accumulateurs hydropneumatiques de caractéristiques élastiques différentes qui sont susceptibles de coopérer sélectivement et par l'intermédiaire de leur moyen amortisseur respectif avec ledit vérin hydraulique, et un moyen de régulation qui est susceptible de mettre en communication ledit vérin hydraulique, soit avec les deux accumulateurs hydropneumatiques précités, soit uniquement avec l'un de ces accumulateurs, caractérisé en ce que ledit moyen de régulation est constitué par plusieurs régulateurs à tiroir qui sont associés respectivement à chaque vérin hydraulique et qui sont pilotés par un distributeur central de commande, et en ce que le tiroir de chaque régulateur est en équilibre dans ses différentes positions entre une pression de pilotage sélectionnée par le distributeur central de commande, qui agit sur une première extrémité du tiroir, et la pression régnant dans la chambre du vérin associé qui agit sur la deuxième extrémité du tiroir et qui constitue une pression de réaction.

On précisera que le tiroir du distributeur central de commande, sollicité par un moyen d'actionnement, est susceptible d'occuper trois positions de distribution qui permettent de sélectionner et de délivrer à chaque régulateur trois pressions de pilotage constituées respectivement par la pression atmosphérique, la pression régnant dans la chambre du vérin associé à ce régulateur et une haute pression.

De plus, le tiroir du distributeur de commande, dans sa position centrale qui correspond à l'état repos du moyen d'actionnement, relie chaque régulateur à tiroir avec un réservoir hydraulique du véhicule pour délivrer à ces régulateurs la pression de pilotage correspondant à la pression atmosphérique, chaque régulateur à tiroir mettant alors chaque vérin du véhicule en liaison hydraulique avec l'accumulateur hydropneumatique associé dont la caractéristique élastique procure au véhicule une suspension dite normale.

Selon encore une autre caractéristique, le distributeur de commande, dans sa position de distribution de la pression de pilotage correspondant à la pression régnant dans la chambre des vérins, est apte à sélectionner et à délivrer, à chaque régulateur d'un essieu, la pression commune régnant dans les chambres des vérins de ce même essieu.

De plus, les extrémités respectives du tiroir du distributeur et du tiroir du régulateur sont pourvues d'axes épaulés recevant des bagues coulissantes sollicitées l'une vers l'autre respectivement par des moyens élastiques de caractéristiques identiques.

On précisera aussi que chaque régulateur à tiroir comporte une chambre de pilotage et une chambre de réaction recevant respectivement la première et la deuxième extrémité du tiroir, la chambre de pilotage étant reliée hydrauliquement au distributeur de commande tandis que la chambre de réaction est reliée à la chambre du vérin associé par l'intermédiaire de deux conduits ménagés dans ledit tiroir, le premier conduit étant formé par un perçage axial borgne débouchant dans la chambre de réaction tandis que le deuxième conduit est constitué par un perçage radial qui communique avec le premier conduit et qui débouche dans une chambre annulaire assurant, lors de son déplacement, la communication sélective du vérin avec les deux accumulateurs hydropneumatiques dont il est équipé.

Par ailleurs, la bague coulissante prévue sur l'axe épaulé de la première extrémité du tiroir du régulateur qui évolue dans la chambre de pilotage reliée hydrauliquement au distributeur central de commande est d'une part réalisée au moins partiellement en un matériau élastique et est, d'autre part, conformée et dimensionnée pour coopérer avec un élément d'obturation de la chambre de pilotage en constituant avec celui-ci un moyen d'étanchéité.

D'autre part, le moyen d'actionnement qui commande le distributeur de commande est constitué par deux électro-aimants agissant sur le tiroir dudit distributeur et qui sont eux-mêmes commandés par des moyens électroniques, à partir de paramètres de fonctionnement du véhicule, délivrés par des capteurs prévus sur celui-ci.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue schématique d'un dispositif de suspension hydropneumatique selon l'invention ;
La figure 2 est une vue en coupe longitudinale d'un régulateur à tiroir équipant chacun des vérins de cette suspension ;
Les figures 3 à 5 représentent de façon schématique le régulateur à tiroir représenté sur la figure 2, respectivement dans ses trois positions de fonctionnement ;
La figure 6 est une vue en coupe longitudinale du distributeur de commande dans sa première position de distribution, faite suivant la ligne VI-VI de la figure 8, tandis que les figures 9 et 11 sont des vues en coupe longitudinale similaires à la figure 6 mais représentant le tiroir du distributeur de commande dans ses deux autres positions respectives de distribution ;
Les figures 7, 10 et 12 sont des vues en coupe longitudinale du distributeur de commande faites respectivement suivant les lignes VII-VII, X-X et XII-XII des figures 6, 9 et 11 ; et
La figure 8 est une vue de côté du distributeur de commande selon l'invention.

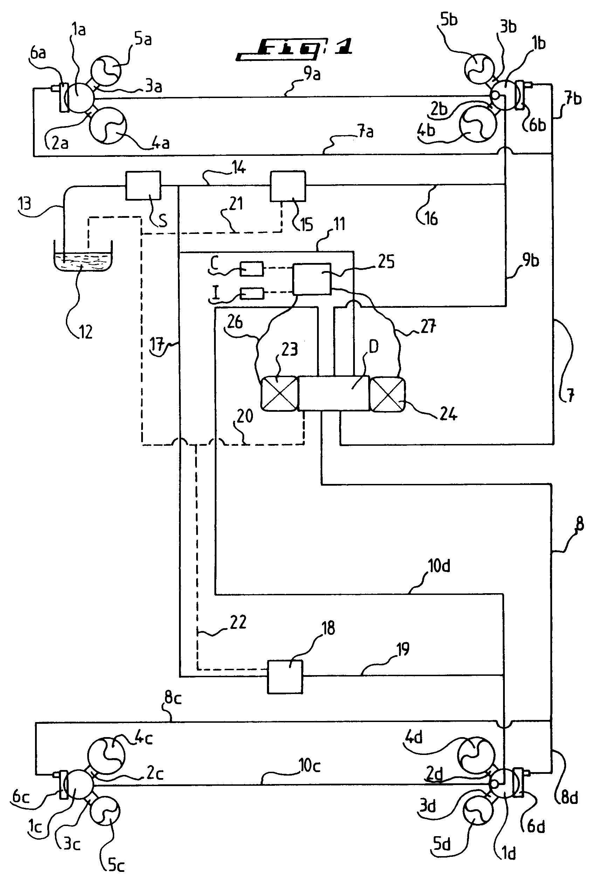

En se référant à la figure 1, un dispositif de suspension hydropneumatique conforme à l'invention comporte des vérins hydrauliques (1a-1d) qui sont reliés respectivement par l'intermédiaire de moyens amortisseurs (2a-2d) et (3a-3d) à des accumulateurs hydropneumatiques (4a-4d) et (5a-5d) de caractéristiques élastiques différentes et qui équipent respectivement chaque roue du véhicule, non représenté.

De plus, ce dispositif comporte un moyen de régulation constitué par des régulateurs à tiroir (6a-6d) associés respectivement à chaque vérin hydraulique (1a-1d) et pilotés par un distributeur central de commande D.

Le distributeur central de commande D est relié aux deux régulateurs à tiroir 6a, 6b de l'essieu avant par l'intermédiaire d'une part d'un conduit 7, et d'autre part de deux conduits 7a et 7b qui sont dérivés du premier et qui débouchent respectivement dans le régulateur 6a et dans le régulateur 6b.

De même, le distributeur central de commande D est relié aux deux régulateurs à tiroir 6c et 6d de l'essieu arrière par un conduit 8 et par deux conduits 8c et 8d qui sont dérivés du premier et qui débouchent respectivement dans le régulateur 6c et dans le régulateur 6d.

Par ailleurs, les vérins hydrauliques 1a et 1b de l'essieu avant sont reliés au distributeur central de commande D par des conduits 9a et 9b tandis que les vérins hydrauliques 1c et 1d de l'essieu arrière sont reliés au distributeur central de commande D par l'intermédiaire de conduits respectifs 10c et 10d.

En outre, le distributeur central de commande D est relié à une source haute pression S par l'intermédiaire d'un conduit 11, la source haute pression S étant alimentée par un réservoir 12 par l'intermédiaire d'un conduit 13 tandis qu'elle est reliée d'une part, par un conduit 14 à un correcteur de hauteur avant 15 contrôlant le volume de fluide à l'intérieur des chambres des vérins hydrauliques 1a et 1d de l'essieu avant par l'intermédiaire d'un conduit 16 qui est connecté, par exemple, au conduit 9b, et d'autre part par un conduit 17 à un correcteur de hauteur arrière 18 contrôlant le volume de fluide à l'intérieur des chambres des vérins hydrauliques 1c et 1d de l'essieu arrière par l'intermédiaire d'un conduit 19, par exemple, connecté au conduit 10d.

De plus, le distributeur central de commande D est relié à la pression atmosphérique par un conduit 20 formant retour à la bâche en débouchant librement dans le réservoir 12.

De même, les correcteurs de hauteur avant 15 et arrière 18 sont mis à la bâche par des conduits 21 et 22 par exemple connectés au conduit 20 précité.

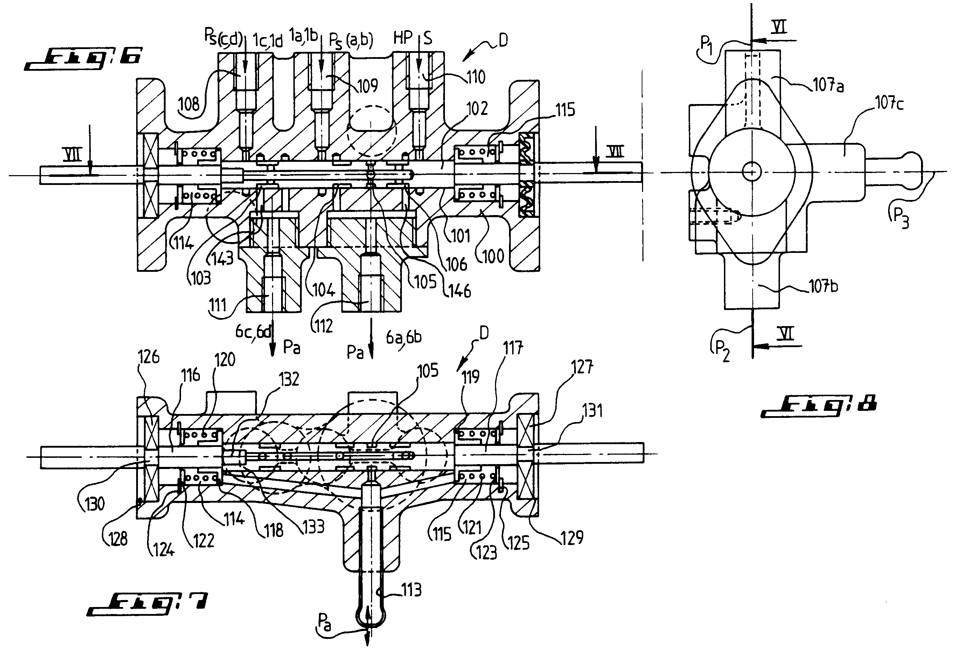

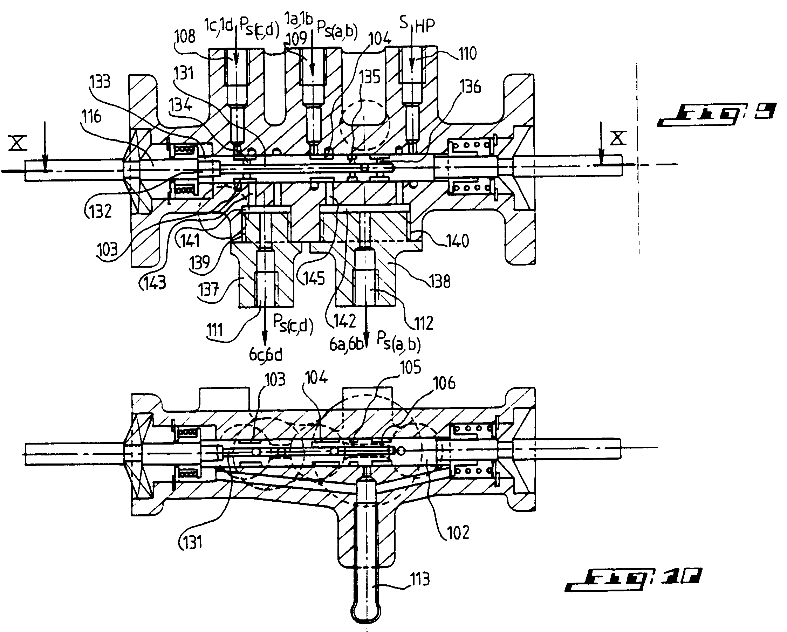

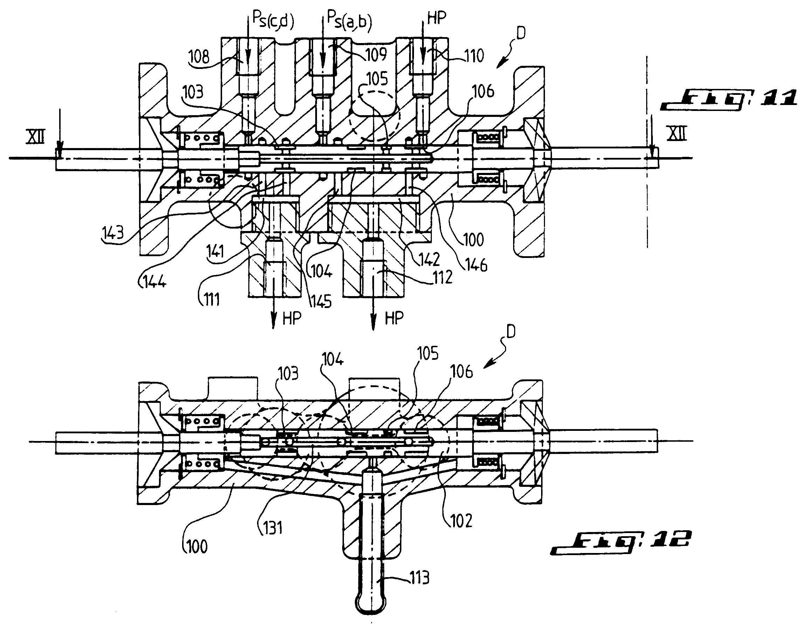

Par ailleurs, on précisera ici que le distributeur central de commande D est pourvu d'un moyen d'actionnement constitué par deux électro-aimants 23 et 24 qui agissent sur le tiroir 102 du distributeur D, visible sur les figures 6, 7 et 9 à 12, et qui sont eux-mêmes commandés par des moyens électroniques 25 par l'intermédiaire d'éléments électriquement conducteurs 26 et 27, soit à partir de paramètres de fonctionnement du véhicule délivrés par des capteurs C, soit à partir d'ordres provenant d'un ou plusieurs interrupteurs I disponibles dans l'habitacle du véhicule et actionnés manuellement par le conducteur de ce véhicule.

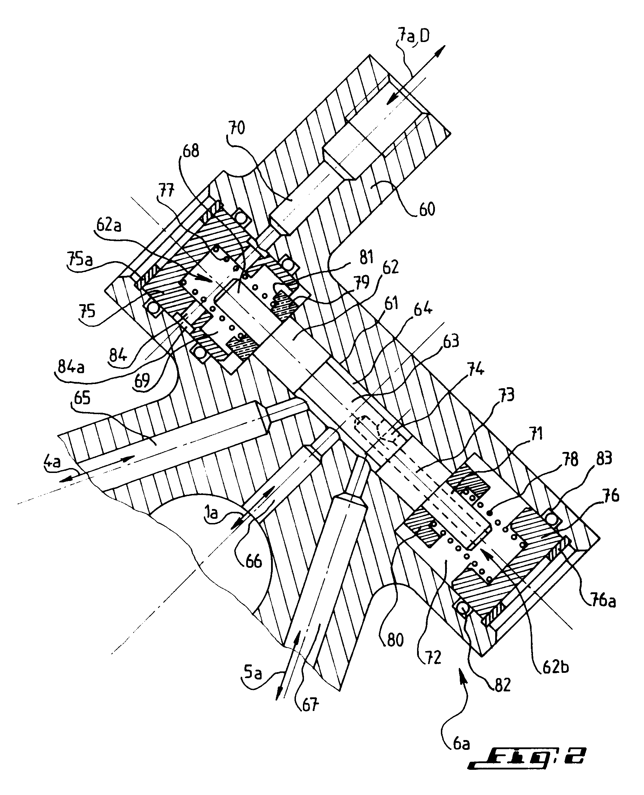

En se reportant désormais à la figure 2, un régulateur à tiroir selon l'invention, par exemple 6a, comporte un corps 60 pourvu d'un alésage longitudinal 61 dans lequel est susceptible de se translater un tiroir cylindrique étagé 62.

Le tiroir 62 définit, par l'intermédiaire de sa portion centrale 63 de plus petit diamètre, une chambre annulaire 64 dans laquelle débouchent des conduits 65, 66 et 67 ménagés dans le corps 60 et reliés respectivement à l'accumulateur hydropneumatique 4a par l'intermédiaire de son moyen amortisseur 2a, à la chambre du vérin hydraulique 1a et à l'accumulateur hydropneumatique 5a par l'intermédiaire de son moyen amortisseur 3a.

Par ailleurs, la première extrémité libre 62a du tiroir 62 est constituée par un axe épaulé 68 évoluant dans une chambre de pilotage 69 reliée au distributeur central de commande D par l'intermédiaire d'un conduit 70 ménagé dans le corps 60 et connecté mécaniquement au conduit 7a.

De même, la deuxième extrémité libre 62b du tiroir 62 est constituée par un axe épaulé 71 évoluant dans une chambre de réaction 72, opposée axialement à la chambre de pilotage 69 et reliée à la chambre du vérin hydraulique 1a par l'intermédiaire de deux conduits 73 et 74 ménagés dans le tiroir 62.

Le premier conduit 73 qui débouche dans la chambre de réaction 72 est constitué par un perçage axial borgne tandis que le deuxième conduit 74 est constitué par un perçage radial communiquant avec le premier conduit 73 et débouchant dans la chambre annulaire 64.

La chambre de pilotage 69 et la chambre de réaction 72 sont respectivement fermées du côté de leur extrémité débouchante par des éléments d'obturation ou capuchons 75 et 76 de forme essentiellement tubulaire et maintenus axialement par des circlips respectifs 75a et 76a.

Les éléments d'obturation ou capuchons 75 et 76 sont respectivement maintenus, d'autre part, par les pressions régnant dans les chambres de pilotage 69 et de réaction 72 et par des moyens élastiques 77 et 78 constitués par des ressorts hélicoïdaux de compression. Par ailleurs, chaque moyen élastique 77, 78 est respectivement en appui contre une bague 79, 80 montée coulissante et en appui sur l'axe épaulé 68, 71.

Ainsi, et comme les moyens élastiques 77 et 78 sont choisis de telle sorte qu'ils présentent des caractéristiques identiques, les bagues coulissantes 79 et 80 sont sollicitées axialement l'une vers l'autre.

La bague 79 qui est solidaire de l'axe épaulé 68 évoluant dans la chambre de pilotage 69 est réalisée au moins partiellement en un matériau élastique et elle comporte une lèvre annulaire 81 prévue du côté de l'élément d'obturation 75, pour coopérer avec celui-ci en constituant ainsi un moyen d'étanchéité.

D'autre part, les éléments d'obturation 75 et 76 sont équipés d'éléments d'étanchéité constitués par des joints toriques 82 prévus dans des gorges annulaires correspondantes 83 ménagées dans le corps 10.

L'élément d'obturation 75 comporte un perçage radial 84 débouchant d'une part, dans la chambre de pilotage 69, et d'autre part dans une gorge périphérique extérieure 84a positionnée de telle sorte qu'elle communique avec le conduit 70 relié au distributeur central de commande D.

En se reportant désormais aux figure 6 à 12, on observera que le distributeur central de commande D comporte un corps 100 pourvu d'un alésage longitudinal 101 dans lequel peut se translater un tiroir 102 susceptible d'occuper trois positions principales de distribution représentées respectivement sur les figures 6-7 ; 9-10 et 11-12.

Le tiroir 102 définit quatre chambres annulaires 103, 104, 105 et 106, elles mêmes aptes à occuper simultanément trois positions principales de distribution lors du déplacement du tiroir 102.

Par ailleurs, le distributeur central de commande D comporte dans un premier plan longitudinal P1, et par exemple dans sa partie supérieure 107a, des conduits d'alimentation 108, 109 et 110 qui sont mécaniquement et respectivement connectés aux conduits 10d, 9b et 11 et qui sont par conséquent et de façon respective hydrauliquement reliés aux chambres des vérins de l'essieu arrière 1c et 1d, aux chambres des vérins de l'essieu avant 1a et 1b et à la source de fluide sous haute pression S.

D'autre part, le distributeur central de commande D comporte, par exemple dans sa partie inférieure 107b, dans un deuxième plan longitudinal P2 coïncidant dans l'exemple de réalisation représenté sur les figures 6 à 12 avec le premier plan P1, des conduits de distribution 111 et 112 qui sont connectés mécaniquement de façon respective aux conduits 8 et 7 et qui sont aussi hydrauliquement reliés de façon respective aux régulateurs à tiroir arrière 6c, 6d par l'intermédiaire des conduits dérivés respectifs 8c et 8d aux régulateurs à tiroir avant 6a, 6b par l'intermédiaire des conduits dérivés respectifs 7a et 7b.

De même, le distributeur central de commande D est pourvu par exemple dans sa partie médiane 107c, dans un plan longitudinal P3, par exemple perpendiculaire aux deux autres plans longitudinaux P1 et P2, d'un conduit d'échappement 113 qui est connecté mécaniquement au conduit 20 et qui est par conséquent relié hydrauliquement au réservoir 12 pour former un retour à la bâche.

Le conduit 113 est relié par ailleurs à deux chambres extrêmes 114 et 115, ménagées de façon coaxiale à l'alésage 101 dans le corps 100 du distributeur central de commande D, pour constituer un retour de fuite vers le réservoir formant bâche 12.

Comme le tiroir 62 de chaque régulateur 6a-6d, le tiroir 102 du distributeur central de commande D est pourvu à ses deux extrémités d'axes épaulés 116 et 117 sur lesquels sont montées coulissantes et en appui latéral deux bagues 118 et 119 sollicitées l'une vers l'autre par des moyens élastiques 120 et 121 constitués par exemple par des ressorts hélicoïdaux de compression.

Chaque moyen élastique 120, 121 sollicite la bague coulissante associée 118, 119 contre l'épaulement du tiroir avec lequel elle coopère tandis qu'il est en appui contre un moyen d'arrêt constitué par une rondelle plate 122, 123 en butée axiale vers l'extérieur du corps 100 du distributeur central de commande D contre des circlips respectifs 124 et 125.

Les chambres extrêmes 114, 115 sont respectivement fermées à leur extrémité débouchante par des joints à soufflet 126, 127 axialement et élastiquement déformables, et qui sont fixés d'une part, dans des évidements respectifs 128, 129 coaxiaux aux chambres extrêmes 114 et 115 ménagées dans le corps 100 du distributeur central de commande D, et d'autre part dans des gorges périphériques 130, 131 respectivement ménagées sur les axes épaulés 116 et 117 du tiroir 102.

Par ailleurs, on remarquera que le tiroir 102 comporte un conduit axial 131 (figure 9) constitué par un perçage borgne fermé à son extrémité débouchante par une partie de fixation 132 faisant saillie de l'axe 116 et maintenue fixement dans un évidement correspondant 133 ménagé dans le tiroir 102.

La liaison mécanique entre la partie de fixation 132 et l'évidement correspondant 133 peut être réalisée par une liaison visséefiletage-taraudage, par collage ou par un emmanchement serré.

Le conduit 131 permet la liaison hydraulique entre les chambres annulaires 103, 105 et 106 qui comportent à cet effet des perçages radiaux respectifs 134, 135 et 136.

De même, on observera que les conduits de distribution 111 et 112 sont ménagés dans des éléments rapportés amovibles 137 et 138 vissés sur le corps 100 du distributeur central de commande D dans des logements appropriés 139 et 140.

Les fonds des logements 139 et 140 forment respectivement avec les extrémités des éléments rapportés 137 et 138 dirigées vers ceux-ci, des chambres de répartition 141 et 142. De plus, des perçages transversaux 143 et 144 (figure 11), ménagés dans le corps 100 débouchent dans la chambre de répartition 141 et sont susceptibles de coopérer à tour de rôle avec la chambre annulaire 103 en fonction de la position de distribution du tiroir 102. Par ailleurs, des perçages transversaux 145 et 146 ménagés dans le corps 100 débouchent dans la chambre de répartition 142 tandis qu'ils sont susceptibles de coopérer à tour de rôle avec les chambres annulaires respectives 104 et 106.

Les axes épaulés 116 et 117 qui constituent les extrémités du tiroir 102 sont susceptibles d'être actionnés par des électro-aimants représentés schématiquement sur la figure 1 et commandés par un cerveau électronique automatiquement ou par l'intermédiaire d'un ou plusieurs interrupteurs commandés manuellement comme il a été expliqué ci-dessus.

Le fonctionnement du dispositif de suspension hydropneumatique selon l'invention est le suivant.

On précisera tout d'abord que les accumulateurs hydropneumatiques (4a-4d) et (5a-5d) munis de leurs moyens amortisseurs respectifs (2a-2d) et (3a-3d) sont choisis de telle sorte que leurs caractéristiques élastiques procurent à la suspension deux niveaux différents d'amortissement et de flexibilité ou raideur lorsqu'ils sont, respectivement et de façon séparée, reliés hydrauliquement au vérin (1a-1d) qui leur est associé.

A cet effet, le premier groupe d'accumulateurs hydropneumatiques (4a-4d) et d'amortisseurs (2a-2d) a été choisi de telle sorte qu'il fournisse, en fonction d'un type particulier de véhicule et d'une utilisation précise de celui-ci, une suspension dite normale, le deuxième groupe d'accumulateurs hydropneumatiques (5a-5d) ayant été dimensionné et taré de telle sorte qu'il fournisse par l'intermédiaire des moyens amortisseurs respectifs (3a-3d) une suspension dite ferme.

Par ailleurs, on constitue le troisième niveau d'amortissement et de flexibilité en reliant de façon simultanée les accumulateurs hydropneumatiques (4a-4d) et (5a-5d) du premier et du deuxième groupe par l'intermédiaire de leurs moyens amortisseurs respectifs aux chambres des vérins hydrauliques (1a-1d) qu'ils équipent.

Ainsi, pour l'obtention d'une suspension normale, les électro-aimants 25 et 26 sont maintenus à l'état repos, le tiroir 102 du distributeur central de commande D demeurant dans sa position de distribution et d'équilibre, dite centrale, comme on peut le voir sur les figures 6 et 7.

Dans cette position, on remarquera (figure 7) que la chambre annulaire 105 coïncide avec le conduit d'échappement 113, si bien que celle-ci se trouve alimentée sous une pression correspondant à la pression atmosphérique Pa.

Par ailleurs, les chambres annulaires 103 et 106, coïncidant respectivement avec les perçages transversaux 143 et 146 et reliées hydrauliquement à la chambre annulaire 105, relient les conduits de distribution respectifs 111 et 112, et par conséquent les chambres de pilotage 69 des régulateurs à tiroir arrière 6c, 6d et des régulateurs à tiroir avant 6a, 6b, à la pression atmosphérique Pa.

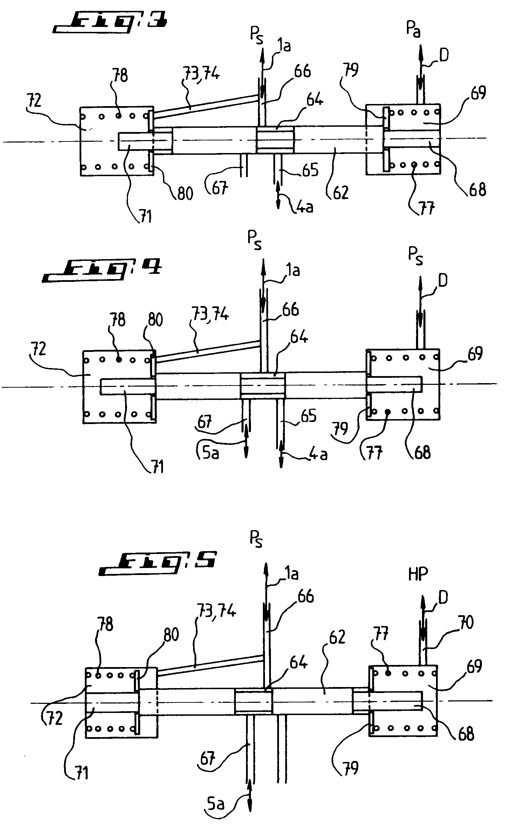

Ainsi, étant donné qu'il règne dans la chambre de réaction 72 de chaque régulateur à tiroir (6a-6d) une pression de réaction qui correspond à la pression Ps régnant dans les chambres des vérins associés (1a-1d) et qui est supérieure et antagoniste à la pression atmosphérique Pa, le tiroir 62 des régulateurs (6a-6d) se positionne (figure 3) vers la chambre de pilotage 69 dans sa première position extrême, la chambre annulaire 64 mettant alors en communication la chambre de chaque vérin (1a-1d) avec l'accumulateur (4a-4d) du premier groupe correspondant par l'intermédiaire de son moyen amortisseur propre (2a-2d), ce qui fournit une suspension dite normale.

Par ailleurs, on remarquera que dans cette position du tiroir 62, la bague coulissante 79 comprime le moyen élastique 77 tandis que sa lèvre annulaire 81 vient s'écraser contre l'élément d'obturation 75 ce qui assure l'étanchéité entre la chambre annulaire 64 et le conduit d'échappement 70, et ce qui évite la mise en place d'un retour de fuite.

Par ailleurs, pour l'obtention d'une suspension dite souple, l'électro-aimant 23 est excité uniquement ce qui entraîne le déplacement axial du tiroir 102 du distributeur central de commande D dans sa première position de distribution extrême, par exemple vers la gauche comme cela a été représenté sur les figures 9 et 10, et ce qui fait coïncider les chambres annulaires 103 et 104 avec les conduits d'alimentation 108 et 109, avec les perçages transversaux 143 et 145, et ainsi avec les conduits de distribution respectifs 111 et 112.

D'autre part, on remarquera que la chambre annulaire 105 ne coïncide plus avec le conduit d'échappement 113.

Ainsi, les chambres de pilotage 69 des régulateurs à tiroir 6a, 6b de l'essieu avant sont en communication hydraulique avec les chambres des vérins (1a-1b) de l'essieu avant tandis que les chambres de pilotage 69 des régulateurs à tiroir 6c, 6d de l'essieu arrière sont en communication hydraulique avec les chambres des vérins 1c, 1d de l'essieu arrière.

Par conséquent, et comme on le voit sur la figure 4, le tiroir 62 de chaque régulateur (6a-6d) occupe sa position d'équilibre centrale puisqu'il règne dans les chambres de pilotage 69 et dans les chambres de réaction 72 des pressions Ps identiques, la chambre annulaire 64 mettant en communication la chambre des vérins (1a-1d) avec les deux accumulateurs hydropneumatiques (4a-4d) et (5a-5d) dont ils sont respectivement équipés, de façon simultanée.

Ainsi, on observera que le distributeur central de commande D, dans sa position de distribution de la pression de pilotage correspondant à la pression Ps régnant dans la chambre des vérins (1a-1d) est apte à sélectionner et à délivrer, d'une part aux régulateurs 6a, 6b de l'essieu avant la pression commune Ps (a, b) régnant dans les chambres des vérins 1a, 1b de l'essieu avant et d'autre part aux régulateurs 6c, 6d de l'essieu arrière la pression Ps (c, d) commune régnant dans les chambres des vérins 1c, 1d de l'essieu arrière ; si bien que le distributeur central de commande D est apte à sélectionner et à délivrer à chaque régulateur d'un essieu la pression commune régnant dans les chambres des vérins de ce même essieu.

Enfin, pour l'obtention d'une suspension dite ferme, l'électro-aimant 24 est le seul excité ce qui permet un déplacement axial du tiroir 102 du distributeur central de commande D dans sa deuxième position de distribution extrême par exemple vers la droite comme il a été représenté sur les figures 11 et 12, pour faire coïncider la chambre annulaire 106 avec le conduit d'alimentation 110 et avec le perçage transversal 146, la chambre annulaire 103 coïncidant alors avec le perçage transversal 144.

Ainsi, les chambres annulaires 103 et 106 étant reliées entre elles hydrauliquement par l'intermédiaire de leur perçage radial 134, 136, et par l'intermédiaire du conduit axial 131, la source de fluide sous haute pression S est reliée aux conduits de distribution 111 et 112, et par conséquent aux chambres de pilotage 69 des régulateurs à tiroir (6a-6d).

Par conséquent, et comme on le voit sur la figure 5, le tiroir 62 de chaque régulateur (6a-6d) est déplacé dans sa deuxième position extrême vers la chambre de réaction 72 dans laquelle règne une pression de réaction qui correspond à la pression règnant dans la chambre du vérin hydraulique (1a-1d) associé et qui est inférieure à la haute pression HP régnant dans la chambre de pilotage 69.

On remarquera donc que la chambre annulaire 64, par l'intermédiaire du déplacement axial du tiroir 62, met en communication la chambre de chaque vérin (1a-1d) avec l'accumulateur hydropneumatique (5a-5d) correspondant du deuxième groupe.

On remarquera donc, de ce qui vient d'être expliqué en détail ci-dessus, que le tiroir 62 de chaque régulateur (6a-6d) est en équilibre ou en butée dans ses différentes positions sollicité par la pression de pilotage, régnant dans la chambre de pilotage correspondante 69, qui est d'une part sélectionnée par le distributeur de commande et qui agit d'autre part sur la première extrémité 62a du tiroir 62, et la pression de service régnant dans la chambre du vérin associé et qui agit sur la deuxième extrémité 62b du tiroir 62 en constituant une pression de réaction.

Par ailleurs, on observera que le tiroir 102 du distributeur central de commande D, en étant sollicité par les électro-aimants 24 et 25 qui forment un moyen d'actionnement, est susceptible d'occuper trois positions de distribution qui permettent de sélectionner et de délivrer à chaque régulateur (6a-6d) trois pressions de pilotage constituées respectivement par la pression atmosphérique Pa, la pression Ps régnant dans la chambre du vérin (1a-1d) associé à ce régulateur et une haute pression HP délivrée par la source de fluide sous haute pression S.

## Revendications

1. Dispositif de suspension hydropneumatique pour véhicule automobile et du type comportant un vérin hydraulique (1a-1d) associé à chaque roue du véhicule et pourvu de deux accumulateurs hydropneumatiques (4a-4d) et (5a-5d) de caractéristiques élastiques différentes qui sont susceptibles de coopérer sélectivement et par l'intermédiaire de leur moyen amortisseur respectif (2a-2d, 3a-3d) avec ledit vérin hydraulique (1a-1d), et un moyen de régulation qui est susceptible de mettre en communication ledit vérin hydraulique (1a-1d), soit avec les deux accumulateurs hydropneumatiques précités, soit uniquement avec l'un de ces accumulateurs, caractérisé en ce que ledit moyen de régulation est constitué par plusieurs régulateurs à tiroir (6a-6d) qui sont associés respectivement à chaque vérin hydraulique (1a-1d) et qui sont pilotés par un distributeur central de commande (D), et en ce que le tiroir (62) de chaque régulateur (6a-6d) est en équilibre dans ses différentes positions entre une pression de pilotage sélectionnée par le distributeur central de commande (D), qui agit sur une première extrémité (62a) du tiroir (62), et la pression régnant dans la chambre du vérin (1a-1d) associé qui agit sur la deuxième extrémité (62b) du tiroir (62) et qui constitue une pression de réaction.

2. Dispositif selon la revendication 1, caractérisé en ce que le tiroir (102) du distributeur central de commande (D), sollicité par un moyen d'actionnement (24, 25), est susceptible d'occuper trois positions de distribution qui permettent de sélectionner et de délivrer à chaque régulateur (6a-6d) trois pressions de pilotage constituées respectivement par la pression atmosphérique Pa, la pression Ps régnant dans la chambre du vérin (1a-1d) associé à ce régulateur et une haute pression HP.

3. Dispositif selon la revendication 1 ou 2, caractérisé en ce que le tiroir (102) du distributeur central de commande (D), dans sa position centrale d'équilibre qui correspond à l'état repos du moyen d'actionnement (24, 25), relie la chambre de pilotage (69) de chaque régulateur à tiroir (6a-6d) avec un réservoir hydraulique (12) du véhicule formant bâche pour délivrer à ces régulateurs une pression correspondant à la pression atmosphérique Pa, chaque régulateur à tiroir (6a-6d) mettant alors en liaison hydraulique chaque vérin (1a-1d) du véhicule avec l'accumulateur hydropneumatique (4a-4d) associé dont les caractéristiques élastiques procurent au véhicule une suspension dite normale.

4. Dispositif selon l'une des revendications 1 à 3, caractérisé en ce que le distributeur central de commande (D), dans sa position de distribution de la pression de pilotage correspondant à la pression Ps régnant dans la chambre des vérins (1a-1d), est apte à sélectionner et à délivrer, à chaque régulateur d'un essieu, la pression commune régnant dans les chambres des vérins de ce même essieu.

5. Dispositif selon l'une des revendications 1 à 4, caractérisé en ce que les extrémités respectives du tiroir (102) du distributeur central de commande (D) et du tiroir (62) des régulateurs (6a-6d) sont pourvues d'axes épaulés (116, 117 ; 68, 71) recevant des bagues coulissantes (118, 119 ; 79, 80) sollicitées respectivement l'une vers l'autre par des moyens élastiques (120, 121 ; 77, 78) de caractéristiques identiques.

6. Dispositif selon l'une des revendications 1 à 5, caractérisé en ce que chaque régulateur à tiroir (6a-6d) comporte une chambre de pilotage (69) et une chambre de réaction (72) recevant respectivement la première (68) et la deuxième (71) extrémité du tiroir (62), la chambre de pilotage (69) étant reliée hydrauliquement au distributeur central de commande (D) tandis que la chambre de réaction (72) est reliée à la chambre du vérin respectif (1a-1d) par l'intermédiaire de deux conduits (73, 74) ménagés dans ledit tiroir (62), le premier conduit (73) étant formé par un perçage axial borgne débouchant dans la chambre de réaction (72) tandis que le deuxième conduit (74) est constitué par un perçage radial communiquant avec le premier conduit et débouchant dans une chambre annulaire (64) qui assure lors de son déplacement la communication sélective de chaque vérin (1a-1d) avec ses deux accumulateurs hydropneumatiques respectifs (4a-4d) et (5a-5d).

7. Dispositif selon la revendication 6, caractérisé en ce que la bague coulissante (79), prévue sur l'axe épaulé (68) de la première extrémité (62a) du tiroir de chaque régulateur (6a-6d) qui évolue dans la chambre de pilotage (69) reliée hyrauliquement au distributeur central de commande (D), est d'une part réalisée au moins partiellement en un matériau élastique, et est, d'autre part, conformée et dimensionnée pour coopérer avec un élément d'obturation (75) de ladite chambre de pilotage (69) en constituant avec celui-ci un moyen d'étanchéité.

8. Dispositif selon l'une quelconque des revendications précédentes, caractérisé en ce que le moyen d'actionnement qui commande le distributeur central de commande (D) est constitué par deux électro-aimants (24, 25) agissant sur le tiroir (102) dudit distributeur central de commande (D) et qui sont eux-mêmes commandés par des moyens électroniques (25) à partir de paramètres de fonctionnement du véhicule délivrés par des capteurs (C) prévus sur celui-ci.

9. Véhicule automobile équipé d'un dispositif selon l'une quelconque des revendications 1 à 8.

## Patentansprüche

1. Hydropneumatische Aufhängung für ein Kraftfahrzeug und derjenigen Gattung, mit einem jedem Rad des Fahrzeugs zugeordneten und mit zwei hydropneumatischen Akkumulatoren (4a-4d) und (5a-5d) unterschiedlicher elastischer Charakteristiken versehenen hydraulischen Kraftzylinder- (1a-1d), welche fähig sind, wahlweise und über deren jeweiliges Dämpfungsmittel (2a-2d, 3a-3d) mit dem besagten hydraulischen Kraftzylinder (1a-1d) zusammenzuwirken, und einem Regelmittel, das fähig ist, den besagten hydraulischen Kraftzylinder (1a-1d) entweder mit den beiden vorgenannten hydropneumatischen Akkumulatoren oder nur mit einem dieser Akkumulatore in Verbindung zu setzen, dadurch gekennzeichnet, dass das besagte Regelmittel durch mehrere Schieberregler (6a-6d) gebildet ist, die jeweils einem hydraulischen Kraftzylinder (1a-1d) zugeordnet sind und die durch einen zentralen Steuerverteiler (D) gesteuert werden und dass der Schieber (62) jedes Reglers (6a-6d) im Gleichgewicht in seinen verschiedenen Stellungen zwischen einem durch den zentralen Steuerverteiler (D) gewählten Steuerdruck, der auf ein erstes Ende (62a) des Schiebers (62) einwirkt und dem in der Kammer des zugeordneten Kraftzylinders (1a-1d) herrschenden Druck, der auf das zweite Ende (62b) des Schiebers (62) einwirkt und der einen Gegendruck bildet, ist.

2. Vorrichtung nach Anspruch 1, dadurch gekennzeichnet, dass der durch ein Betätigungsmittel (24, 25) beaufschlagter Schieber (102) des zentralen Steuerverteilers (D) fähig ist, drei Verteilungsstellen einzunehmen, die es gestatten, drei jeweils durch den atmosphärischen Druck Pa, den in der Kammer des diesem Regler zugeordneten Kraftzylinders (1a-1d) herrschenden Druck Ps und einen hohen Druck HP gebildete Steuerdrücke zu wählen und jedem Regler (6a-6d) zu liefern.

3. Vorrichtung nach Anspruch 1 oder 2, dadurch gekennzeichnet, dass der Schieber (102) des zentralen Steuerverteilers (D) in seiner zentralen Gleichgewichtstellung, die dem Ruhezustand des Betätigungsmittels (24, 25) entspricht, die Steuerkammer (69) jedes Schieberreglers (6a-6d) mit einem ein Sammelgefäss bildenden hydraulischen Behälter (12) des Fahrzeugs zu verbinden, um diesen Reglern einen dem atmosphärischen Druck Pa entsprechenden Druck zu liefern, wobei jeder Schieberregler (6a-6d) dann jeden Kraftzylinder (1a-1d) des Fahrzeugs mit dem zugeordneten hydropneumatischen Akkumulator (4a-4d) in hydraulische Verbindung setzt, dessen elastische Charakteristiken dem Fahrzeug eine sogenannte normale Aufhängung verschaffen.

4. Vorrichtung nach einem der Ansprüche 1 bis 3, dadurch gekennzeichnet, dass der zentrale Steuerverteiler (D) in seiner Stellung zur Verteilung des dem in der Kammer der Kraftzylinder (1a-1d) herrschenden Druck Ps entsprechenden Steuerdrucks, fähig ist, den in den Kammern der Kraftzylinder einer selben Radachse herrschenden gemeinsamen Druck zu wählen und diesen jedem Regler dieser Radachse zu liefern.

5. Vorrichtung nach einem der Ansprüche 1 bis 4, dadurch gekennzeichnet, dass die jeweiligen Enden des Schiebers (102) des zentralen Steuerverteilers (D) und des Schiebers (62) der Regler (6a-6d) mit mit Schultern versehenen Stangen (116, 117; 68, 71) versehen sind, welche Gleitringe (118, 119; 79, 80) aufnehmen, die jeweils gegeneinander durch elastische Mittel (120, 121; 77, 78) identischer Charakteristiken beaufschlagt werden.

6. Vorrichtung nach einem der Ansprüche 1 bis 5, dadurch gekennzeichnet, dass jeder Schieberregler (6a-6d) eine Steuerkammer (69) und eine Gegenwirkungskammer (72) aufweist, die jeweils das erste und das zweite Ende (68) und (71) des Schiebers (62) aufnehmen, wobei die Steuerkammer (69) mit dem zentralen Steuerverteiler (D) hydraulisch verbunden ist, während die Gegenwirkungskammer (72) mit der Kammer des jeweiligen Kraftzylinders (1a-1d) über zwei in dem besagten Schieber (62) gebildete Kanäle (73, 74) verbunden ist, wobei der erste Kanal (73) durch eine in die Gegenwirkungskammer (72) mündende blinde Axialöffnung gebildet wird, während der zweite Kanal (74) durch eine mit dem ersten Kanal in Verbindung stehende und in eine ringförmige Kammer (64) mündende Radialbohrung gebildet wird, welche ringförmige Kammer, während ihrer Verschiebung, die wählbare Verbindung jedes Kraftzylinders (1a-1d) mit seinen beiden jeweiligen hydropneumatischen Akkumulatoren (4a-4d) und (5a-5d) gewährleistet.

7. Vorrichtung nach Anspruch 6, dadurch gekennzeichnet, dass der auf der mit Schultern versehenen Stange (68) des ersten Endes (62a) des Schiebers jedes Reglers (6a-6d) vorgesehene Gleitring (79), der sich in der mit dem zentralen Steuerverteiler (D) hydraulisch verbundenen Steuerkammer (69) bewegt, einerseits wenigstens teilweise aus einem elastischen Werkstoff hergestellt ist und andererseits gestaltet und bemessen ist, um mit einem Element (75) zum Verschliessen der besagten Steuerkammer (69) unter Bildung eines Dichtungsmittels mit demselben zusammenzuwirken.

8. Vorrichtung nach irgendeinem der vorangehenden Ansprüche, dadurch gekennzeichnet, dass das Betätigungsmittel, das den zentralen Steuerverteiler (D) betätigt, durch zwei auf den Schieber (102) des besagten zentralen Steuerverteilers (D) wirkende Elektromagnete (24, 25) gebildet ist, welche selbst durch elektronische Mittel (25) ausgehend von durch an dem Fahrzeug vorgesehe Messgeber (C) gelieferte Betriebsparameter des Fahrzeugs gesteuert werden.

9. Mit einer Vorrichtung nach irgendeinem der Ansprüche 1 bis 8 ausgerüstetes Kraftfahrzeug.

## Claims

1. Hydropneumatic suspension device for an automotive vehicle and of the type comprising a hydraulic jack (1a-1d) associated with each wheel of the vehicle and provided with two hyropneumatic accumulators (4a-4d) and (5a-5d) with different elastic characteristics which are adapted to co-operate selectively and through the medium of their respective damping means (2a-2d, 3a-3d) with the said hydraulic jack (1a-1d) and a regulation means which is adapted to put the said hydraulic jack (1a-1d) in communication either with both aforesaid hydropneumatic accumulators or only with one of these accumulators, characterized in that the said regulation means consist of one or several spool regulators (6a-6d) which are associated with each hydraulic jack (1a-1d), respectively, and which are operated by a central control distributor (D) and in that the spool (62) of each regulator (6a-6d) is in equilibrium in its different positions between one operating pressure selected by the central control distributor (D), which is acting upon a first end (62a) of the spool (62) and the pressure prevailing in the chamber of the associated jack (1a-1d) which is acting upon the second end (62b) of the spool (62) and which constitutes a reaction pressure.

2. Device according to claim 1, characterized in that the spool (102) of the central control distributor (D), acted upon by an actuating means (24, 25), is adapted to assume three distribution positions which allow to select and to deliver to each regulator (6a-6d) three operating pressures constituted by the atmospheric pressure Pa, the pressure Ps prevailing within the chamber of the jack (1a-1d) associated with this regulator and a high pressure HP, respectively.

3. Device according to claim 1 or 2, characterized in the spool (102) of the central control distributor (D) in its central equilbrium position which corresponds to the rest state of the actuating means (24, 25) connects the operating chamber (69) of each spool regulator (6a-6d) to a hydraulic reservoir (12) of the vehicle forming a tank for delivering to these regulators a pressure corresponding to the atmospheric pressure Pa, each spool regulator (6a-6d) putting then each jack (1a-1d) of the vehicle in hydraulic connection with the associated hydropneumatic accumulator (4a-4d), the elastic characteristics of which provide a so-called normal suspension to the vehicle.

4. Device according to one of claims 1 to 3, characterized in that the central control distributor (D) in its position of distribution of the operating pressure corresponding to the pressure Ps prevailing in the chamber of the jacks (1a-1d) is adapted to select and to deliver to each regulator of an axle the common prevailing within the chambers of the jacks of this same axle.

5. Device according to one of claims 1 to 4, characterized in that the respective ends of the spool (102) of the central control distributor (D) and of the spool (62) of the regulators (6a-6d) are provided with shouldered shafts (116, 117, 68, 71) receiving sliding rings (118, 119; 79, 80) respectively urged towards each other by elastic means (120, 121; 77, 78) with identical characteristics.

6. Device according to one of claims 1 to 5, charactrerized in that each spool regulator (6a-6d) comprises a pilot chamber (69) and a reaction chamber (72) receiving the first and the second ends (68) and (71), respectively, of the spool (62), the pilot chamber (69) being hydraulically connected to the central control distributor (D) whereas the reaction chamber (72) is connected to the chamber of the respective jack (1a-1d) through the medium of two ducts (73, 74) formed in the said spool (62), the first duct (73) being formed by an actual blind bore opening into the reaction chamber (72) whereas the second duct (74) is constituted by a radial bore communicating with the first duct and opening into an annular chamber (64) which ensures upon its displacement the selective communication of each jack (1a-1d) with its two respective hydropneumatic accumulators (4a-4d) and (5a-5d).

7. Device according to claim 6, characterized in that the sliding ring (79) provided on the shouldered shaft (68) of the first end (62a) of the spool of each regulator (6a-6d) which is moving within the pilot chamber (69) hydraulically connected to the central control distributor (D) is on the one hand made at least partially from an elastic material and is on the other hand shaped and dimensioned to co-operate with an element (75) for closing the said pilot chamber (69) while constituting a sealing means therewith.

8. A device according to any one of the foregoing claims, characterized in that the actuating means, which operates the central control distributor (D) is constituted by two electro-magnets (24, 25) acting upon the spool (102) of the said central control distributor (D) and which are themselves controlled by electronic means (25) from operating parameters of the vehicle delivered by sensors (C) provided on the latter.

9. Automotive vehicle fitted with a device according to any one of claims 1 to 8.
